Europäisches Patentamt

European Patent Office

Office européen des brevets

(11) Veröffentlichungsnummer: **0 116 901**
A2

(12) # EUROPÄISCHE PATENTANMELDUNG

(21) Anmeldenummer: 84101313.9

(51) Int. Cl.³: **G 01 N 29/04**

(22) Anmeldetag: 09.02.84

(30) Priorität: 10.02.83 DE 3304836

(43) Veröffentlichungstag der Anmeldung:
29.08.84 Patentblatt 84/35

(84) Benannte Vertragsstaaten:
DE FR GB IT NL SE

(71) Anmelder: Deutsche Forschungs- und Versuchsanstalt
für Luft- und Raumfahrt e.V.
Linder Höhe
D-5000 Köln 90(DE)

(72) Erfinder: Hillger, Wolfgang, Dr.-Ing.
Unstrutstrasse 26
D-3300 Braunschweig(DE)

(74) Vertreter: Gralfs, Harro, Dipl.-Ing.
Am Bürgerpark 8
D-3300 Braunschweig(DE)

(54) Vorrichtung zur Ultraschallprüfung.

(57) Vorrichtung zur Ultraschallprüfung mit einem Stoßwellensender und einem breitbandigen Prüfkopf, dem empfangsseitig wenigstens ein Bandpaßfilter nachgeschaltet ist, das für ein Frequenzspektrum durchlässig ist, das wesentlich schmaler ist als das vom Sendekristall abgegebene Breitbandspektrum. Das ausgefilterte Schmalbandspektrum ist auf Anzeige- und/oder Aufzeichnungsgerät geschaltet. Das Bandpaßfilter kann durchstimmbar ausgebildet sein, es kann aber auch eine Mehrzahl parallel betreibbarer Bandpaßfilter vorgesehen sein, die auf unterschiedliche Mittenfrequenzen abgestimmt sind. Zweckmäßig ist zu dem Bandpaßfilter ein Bypaß für das Breitbandspektrum vorgesehen. Breitbandspektrum und Schmalbandspektrum sind dabei parallel auf das Anzeige- und/oder Aufzeichnungsgerät geschaltet. Es können weiter Schaltmittel vorgesehen sein, mit denen nur im Monitorblendenbereich das Schmalbandfilter wirksam gemacht wird, um durch exaktes Setzen von Blenden eine hohe axiale Auflösung zu erhalten.

FIG.1

EP 0 116 901 A2

Croydon Printing Company Ltd.

Gralfs  Patentanwalt  Am Bürgerpark 8  D 3300 Braunschweig Germany

Am Bürgerpark 8
D 3300 Braunschweig, Germany
Telefon 05 31 - 7 47 98
Cable patmarks braunschweig

Deutsche Forschungs- und
Versuchsanstalt für Luft-
und Raumfahrt e.V.
Linder Höhe

5000 Köln 90

Vorrichtung zur Ultraschallprüfung

Die Erfindung bezieht sich auf eine Vorrichtung zur Ultraschallprüfung mit einem Stoßwellensender, einem breitbandigen Prüfkopf
und einem Anzeige- und/oder Aufzeichnungsgerät für die reflektierten Signale, die vom Prüfkopf empfangen werden.

Die Ultraschallprüfung ist ein verbreitetes Verfahren zur zerstörungsfreien Werkstoffprüfung. Hierbei wird die verhältnismäßig
ungehinderte und bei den verwendeten hohen Frequenzen gut ausgerichtete Ausbreitung des Ultraschalls in festen Körpern benutzt, um Fehlstellen nachzuweisen, an denen Schallwellen reflektiert werden. Fehlstellen können in Durchschallung oder mit
Hilfe der Impuls-Echo-Technik nachgewiesen werden. Im ersten Fall
nimmt die durchgelassene Schallintensität ab und im zweiten Fall
werden zusätzliche Reflexionen zwischen dem Eintrittsecho und dem
Rückwandecho ausgewertet.

Bei der Ultraschallprüfung werden die Ultraschallimpulse dadurch erzeugt, daß piezoelektrische Wandler durch einen kurzen, einseitigen Spannungsstoß angeregt werden.

Das Verhalten der Ultraschallimpulse im Werkstoff hängt stark von der Frequenz bzw. der Wellenlänge ab, und zwar insbesondere in bezug auf die durch den Fokusabstand gegebene Nahfeldlänge und den Divergenzwinkel im Fernfeld, Streuung und Absorption sowie Reflexion an Fehlstellen (Crostack u.a. "Ultraschallprüfung mit Sendeimpulsen stufenlos veränderlicher Frequenz und steuerbarer Spektralverteilung" in der Zeitschrift "Materialprüfung", 20 (1978), Nr. 10, S. 372/377).

Der in bekannten Vorrichtungen zur Ultraschallprüfung verwendete Stoßwellensender erzeugt einen einseitigen negativen Impuls mit einem breitbandigen Frequenzspektrum von beispielsweise 0 bis 14 MHz.

Derartige Sender sind relativ einfach im Aufbau und daher preiswert. Eine große Bandbreite ist jedoch ungünstig, weil die Definition für die Bewertung der Prüfdaten schwierig und unter Umständen unmöglich ist. Das Prüffrequenzspektrum hängt hierbei von der Ausbildung und Auslegung des Prüfkopfes ab.

Um eine eindeutige Definition für die Bewertung der Prüfdaten zu erhalten, ist es bekannt, den Sender als Schmalbandsender auszubilden, von dem schmalbandige Ultraschallimpulse, vorzugsweise veränderlicher Frequenz, erzeugt werden. Diese Technik ist als CS-(Control Signals)-Technik bekannt. Hierbei wird das gewünschte schmalbandige Sendesignal durch Modulation eines monochromatischen Wechselspannungszuges der gewünschten Prüffrequenz mit einem Dreieck- oder Sinusimpuls verschiedener Exponenten erzeugt. Die Dauer der Hüllkurve muß dabei stets größer sein als die Schwingungsdauer der zu modulierenden Prüffrequenz. Die mit einem solchen Schmalbandsender betriebenen breitbandigen Prüfköpfe erzeugen akustische Impulse mit definierter Prüffrequenz und Spektralverteilung.

Die Realisierung eines Schmalbandsenders erfordert einen im Vergleich zum üblichen Stoßwellensender (Breitbandsender) sehr hohen elektronischen Schaltungsaufwand, der wiederum zu Kosten führt, die beispielsweise mehr als das 25fache der Kosten für einen Stoßwellensender betragen, der zur Standardausrüstung eines normalen Ultraschallprüfgerätes gehört.

Bei der CS-Technik erfolgt die Begrenzung des Impulsspektrums bereits im Sender des Übertragungskanals "Sender-Prüfkopf-Werkstück-Prüfkopf-Empfänger". Damit wird die theoretisch mögliche Bandbreite dieses Übertragungskanals nicht voll ausgenutzt, und es gehen nützliche Informationen verloren, nämlich diejenigen, die nicht im Frequenzspektrum des Senders vorhanden sind, aber von den übrigen Gliedern des Übertragungskanals her möglich sind. Schmalbandsender sind normalerweise einstellbar in bezug auf Frequenz und Impulsbreite. Um eine Prüfung mit verschiedenen Frequenzspektren durchführen zu können, muß ein solcher Schmalbandsender jeweils von Schuß zu Schuß umgeschaltet werden. Die Prüfung mit unterschiedlichen Frequenzspektren ist also zwangsläufig seriell mit entsprechendem Zeitaufwand.

Aufgabe der Erfindung ist es, eine Vorrichtung zur Ultraschallprüfung zu schaffen, die mit einem einfachen breitbandigen Stoßwellensender arbeitet und die Durchführung von Ultraschallprüfungen mit definierter Spektralverteilung und Mittenfrequenz verbunden mit hoher axialer und lateraler Auflösung ermöglicht.

Diese Aufgabe wird gemäß der Erfindung dadurch gelöst, daß dem Prüfkopf empfangsseitig wenigstens ein Bandpaßfilter nachgeschaltet ist, das für ein Frequenzspektrum durchlässig ist, das wesentlich schmaler ist als das vom Sendekristall abgegebene Breitbandspektrum und daß das ausgefilterte Schmalbandspektrum auf das Anzeige- und/oder Aufzeichnungsgerät geschaltet ist.

Vorzugsweise ist ein durchstimmbares Bandpaßfilter vorgesehen.

Zweckmäßig ist zu dem Bandpaßfilter ein Bypass für das Breitbandspektrum vorgesehen, wobei Breitbandspektrum und Schmalbandspektrum parallel auf ein zweikanaliges Anzeige- und/oder Aufzeichnungsgerät geschaltet sind.

Zweckmäßig sind Schaltmittel vorgesehen, mit denen in ausgewählten Monitorblendenbereichen das Schmalbandfilter wirksam gemacht wird. Hiermit kann durch exaktes Setzen von Blenden eine hohe axiale Auflösung erzielt werden.

Bei Verwendung einer Mehrzahl von parallel geschalteten Bandpaßfiltern ist eine Mehrfrequenzprüfung aus einem Schuß möglich, d.h. mit einem Ultraschallimpuls kann die Amplitude der reflektierten Ultraschallwellen unterschiedlicher Frequenzen gleichzeitig bestimmt werden.

Soll außer einer hohen lateralen auch gleichzeitig eine hohe axiale Auflösung erreicht werden, ist bei der automatischen Auswertung für jede Monitorblende, d.h. für jeden selektierten Zeitbereich, eine separate Filterung notwendig. Das breitbandige Empfangssignal wird dazu nur im Blendenbereich auf das Empfangsfilter geschaltet. Zu diesem Zweck sind am Filtereingang Schaltmittel vorzusehen, die in Abhängigkeit von der Monitorblende geschaltet werden. Mit diesem Auswerteverfahren erreicht man selbst bei schmalbandigen und damit längeren Impulsen eine hohe axiale Auflösung.

Ein weiterer Vorteil besteht noch darin, daß vorhandene Ultraschallprüfanlagen mit breitbandigen Stoßwellensender mit einem Bandpaßfilter gemäß der Erfindung ohne weiteres mit geringen Kosten nachgerüstet werden können.

Die Erfindung ist in der Zeichnung beispielsweise veranschaulicht und im nachstehenden im einzelnen anhand der Zeichnung beschrieben.

Fig. 1    zeigt schematisch eine Ultraschallprüfanlage mit einem Bandpaßfilter gemäß der Erfindung.

Fig. 2    zeigt die elektrische Schaltung eines Empfängerfilters mit schmalbandigem und breitbandigem Ausgang, wie er in einer Vorrichtung gemäß der Erfindung Verwendung finden kann.

Fig. 3    zeigt ein Standard, wie es zur Durchführung von Vergleichsversuchen verwendet wurde.

Fig. 4    zeigt einen C-Scan mit Amplitudeneinblendungen des Standards nach Fig. 3 bei Auswertung des Breitbandsignales.

Fig. 5    zeigt einen C-Scan mit Amplitudeneinblendung des Standard nach Fig. 3 mit Signalbehandlung durch ein empfangsseitig angeordnetes Bandpaßfilter.

Fig. 6      zeigt zwei Oszillogramme einer fehlerfreien Stelle
            - Darstellung oben - und einer fehlerbehafteten Stelle
            - Darstellung unten -; wiedergegeben ist jeweils im
            oberen Signal das ausgefilterte Frequenzspektrum,
            während im unteren Kanal das breitbandige Frequenzspektrum erscheint.

Fig. 7      zeigt die Schaltung eines durchstimmbaren Bandpaßfilters, wie es zur Plattenwellenprüfung verwendet
            wird.

Fig. 8      zeigt das Prinzip der Plattenwellenprüfung anhand einer
            Blechverklebung zwischen zwei Aluminiumplatten.

Fig. 9      zeigt die Oszillogramme einer Plattenwellenprüfung ohne
            Klebefehler - obere Darstellung - und mit Klebefehler
            - untere Darstellung.

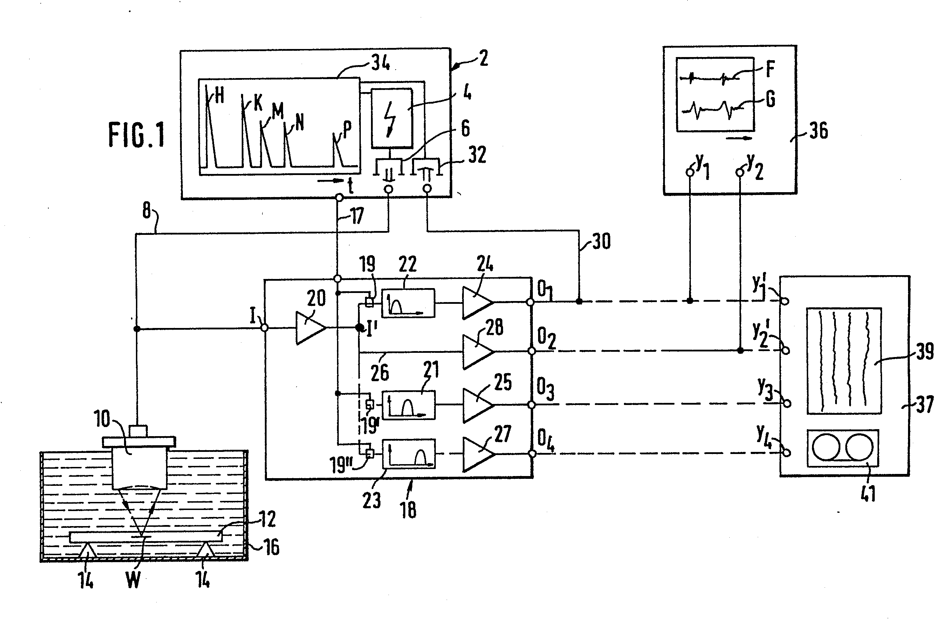

In Fig. 1 ist eine Anlage dargestellt, wie sie bei der Durchführung der weiter unten zu beschreibenden Fehlerprüfungen
mittels Ultraschall verwendet wurde. Das Ultraschallgerät 2 ist
von bekannter Bauart und lediglich schematisch dargestellt. Das
Prüfgerät ist mit einem breitbandigen Stoßwellensender 4 ausgerüstet. Der Ausgang 6 des Stoßwellensenders ist über ein Kabel 8
mit dem Prüferkopf 10 verbunden. Für die Versuche wurde ein
Prüfkopf mit einem gemeinsamen Quarz zum Sender und Empfänger
verwendet (Typ H 10 MP 15 der Firma Krautkrämer GmbH, Köln). Der
Prüfling 12 ist in üblicher Weise auf zwei Trägern 14 in einem
mit Flüssigkeit gefüllten Tauchbecken 16 angeordnet, in dem der
Prüfkopf 10 eingetaucht wird. Der Weg des gesendeten Impuls ist
in der Zeichnung gestrichelt und der Weg des reflektierten Impuls
in voller Linie schematisch dargestellt. An das Kabel 8 ist
weiter ein Filtersystem mit dem Eingang I und zwei Ausgängen

$O_1$ und $O_2$ angeschlossen. Dem Eingang I nachgeschaltet ist ein Impedanzwandler 20 vorgesehen. Das Signal wird dann einmal über ein Bandpaßfilter 22 mit nachgeschaltetem Impedanzwandler 24 auf den Ausgang $O_1$ und zum andern über einen Bypass 26 mit einem Impedanzwandler 28 auf den Ausgang $O_2$ geschaltet. Der Ausgang $O_2$ steht über ein Kabel 30 mit dem Eingang 32 des Prüfgerätes 2 in Verbindung. Das Prüfgerät ist mit einem Oszilloskop 34 versehen, auf das die gesendeten Impulse und die empfangenen Impulse geschaltet sind. Auf dem Schirm des Oszilloskopen 34 sind der gesendete Impuls H, der von der Oberfläche des Werkstückes reflektierte Impuls K, der von einem Fehler W reflektierte Impuls M, der von der Rückseite des Werkstückes reflektierte Impuls N und der vom Boden des Tauchbeckens bzw. einem Hilfsreflektor reflektierte Impuls P über der Zeitbasis t dargestellt.

Die Anlage ist weiter mit einem zweikanaligen Oszilloskop 36 mit den Eingängen $y_1$ und $y_2$ dargestellt. Auf $y_1$ ist das bei $O_1$ anstehende Ausgangssignal und auf $y_2$ das bei $O_2$ anstehende Breitbandsignal geschaltet. Das Schmalbandsignal F ist oben dargestellt, während das Breitbandsignal G unten erscheint.

Parallel zu dem Oszilloskop kann schließlich ein Aufzeichnungsgerät 37, hier als Bandschreiber 39 schematisch angedeutet, geschaltet sein mit dem zu $y_1$ und $y_2$ des Oszilloskops 36 parallelen Eingängen $y_1'$ und $y_2'$. Zur Aufzeichnung kann auch ein analoger oder digitaler Datenspeicher 41 vorgesehen werden. Die Ausgänge $O_1$ und $O_2$ können auch auf einen on-line betriebenen Rechner geschaltet sein, der anstatt des Aufzeichnungsgerätes, aber auch parallel zu diesem vorgesehen sein kann.

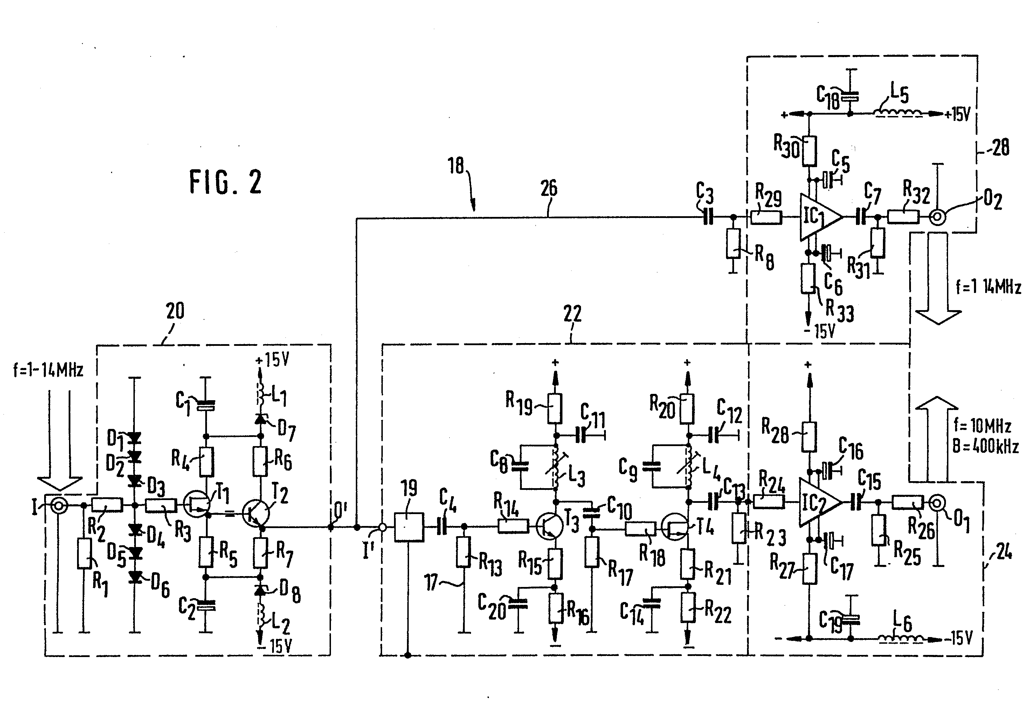

Die Schaltung eines Ausführungsbeispieles für das Filtersystem 18 ist in Fig. 2 wiedergegeben. In der folgenden Beschreibung werden folgende Kurzbezeichnungen verwendet. R = Widerstand, C = Kondensator, T = Transistor, D = Diode und L = Induktivität.

Der dem Eingang I nachgeschaltete Impedanzwandler 20 ist zweistufig mit den beiden Transistoren $T_1$ und $T_2$ aufgebaut. Das
Eingangssignal bei I gelangt über $R_2$ und $R_3$ auf das Gate des als
Feldtransistor ausgebildeten Transistors $T_1$. Die Dioden $D_1$ bis $D_3$
und $D_4$ bis $D_6$ bilden einen Überspannungschutz gegen die vom
Sender mit einer Spannung von ca. 300 V abgegebenen Impulse. Über
den Widerstand $R_1$ wird das Gatepotential auf 0 V eingestellt. Die
Betriebsspannung der Transistoren $T_1$ und $T_2$ wird mit Hilfe der
Zener-Dioden $D_7$ und $D_8$ von der Betriebsspannung $\pm$ 15 V auf
$\pm$ 7,5 V herabgesetzt. Die Zener-Dioden 7 und 8 sind über die
Induktivitäten $L_1$, $L_2$ an die Betriebsspannungsquelle $\pm$ 15 V
angeschaltet.

Am Ausgang O' des Impedanzwandlers 20 wird das Signal in einen
breitbandigen Zweig 26 und einen schmalbandigen Zweig 22 aufgeteilt.

Der breitbandige Zweig 26 ist über den Impedanzwandler 28 mit
einem Verstärker $IC_1$, der in bekannter Weise beschaltet ist, auf
den Ausgang $O_2$ geschaltet. Dem Impedanzwandler 28 ist ein Hochpaßfilter (2,3 KHz) mit $C_3$ und $R_8$ vorgeschaltet, der die an O'
anstehende Gleichspannung abtrennt und die weit außerhalb des
Ultraschallfrequenzbandes (1 - 14 MHz) liegenden Störungen unterdrückt. Mit $R_{30}$ und $R_{33}$ sowie $C_5$ und $C_6$ wird die Betriebsspannung
für den Verstärker $IC_1$ gesiebt. Der Kondensator $C_7$ schützt den
Verstärker $IC_1$ gegen Zerstörung durch Gleichspannungen, die von
außen auf den Ausgang $E_2$ gelangen können.

Der zweistufig ausgebildete Bandpaßfilter 22 weist einen als
spannungsgesteuerte Stromquelle geschalteten ersten Transistor $T_3$
auf, an dessen Basis das bei O' anstehende Empfangssignal über $C_4$
und $R_{14}$ angeschaltet ist. Über $R_{13}$ wird die Vorspannung auf 0 V

eingestellt. $R_{15}$ bildet eine starke Signalkopplung, um eine Übersteuerung der ersten Stufe zu vermeiden. Der Emitter von $T_3$ ist über $R_{15}$ und $R_{16}$ mit der negativen Spannungsquelle - 15 V verbunden. $R_{16}$ ist mit $C_{20}$ wechselspannungsmäßig überbrückt und stellt zusammen mit $R_{15}$ den Ruhestrom ein. An den Kollektor ist ein Schwingkreis angeschaltet, der aus $L_3$ und $C_8$ gebildet ist. Dieser Schwingkreis hat eine Resonanzfrequenz von 10 MHz und wird mit $R_{17}$ bedämpft. Das Signal gelangt über $C_{10}$ und $R_{18}$ auf die zweite Filterstufe mit dem Feldeffekttransistor $T_4$, von dem Source und Drain in gleicher Weise beschaltet sind wie Emitter und Kollektor bei $T_3$. Der Schwingkreis mit $L_4$ und $C_9$ ist hier durch $R_{23}$ bedämpft. $R_{19}$ und $R_{20}$ dienen in Verbindung mit den Kondensatoren $C_{11}$ und $C_{12}$ der Betriebsspannungsentkopplung in den beiden Filterstufen.

Dem Ausgang der zweiten Filterstufe ist der Impedanzwandler 24 nachgeschaltet, der wie der Impedanzwandler 28 des breitbandigen Zweiges zur Impedanzanpassung eines 50-Ohm-Koaxialkabels an den Ausgang $O_1$ dient. Der Impedanzwandler 24 weist wiederum einen Verstärker $IC_2$ auf, der in gleicher Weise beschaltet ist wie der Verstärker $IC_1$ des Impedanzwandlers 28. Der Ausgang hat eine Bandbreite von 3 dB entsprechend 400 kHz bei einer Mittenfrequenz des Bandpaßfilters von 10 MHz.

Wie in Fig. 1 dargestellt, können in dem Filtersystem 18 parallel zueinander mehrere Schmalbandfilter vorgesehen sein, die jeweils auf unterschiedliche Frequenzbänder abgestimmt sind. Diese parallelen Schmalbandfilter 21, 23 sind eingangsseitig an den Ausgang O' des Impedanzwandlers 20 angeschlossen und ausgangsseitig jeweils an einen Impedanzwandler 25, 27 mit Ausgängen $O_3$ und $O_4$. $O_3$ und $O_4$ sind in der Zeichnung mit Verbindungen zu von $y_1$' und $y_2$' gesonderten Eingängen $y_3$ und $y_4$ des Aufzeichnungsgerätes 37 dargestellt, das für die Signale an $y_3$ und $y_4$ mit gesonderten Aufzeichnungsspuren versehen ist.

In Fig. 1 und 2 ist am Eingang des/der Schmalbandfilter jeweils eine elektronische Schaltanordnung 19, 19' und 19" schematisch angedeutet. Diese Schaltanordnungen sind über das Kabel 17 vom Prüfgerät 34 steuerbar, und zwar so, daß das Schmalbandfilter im Monitorblendenbereich des Prüfgerätes geschaltet wird. Auf diese Weise ist exaktes Setzen von Blenden möglich, durch die eine hohe axiale Auflösung auch im Schmalbandsignal erzielbar ist. Die Blende kann dabei so gesetzt werden, daß nur Signale zwischen Oberflächen- und Rückwandecho auf den Schmalbandfilter gelangen.

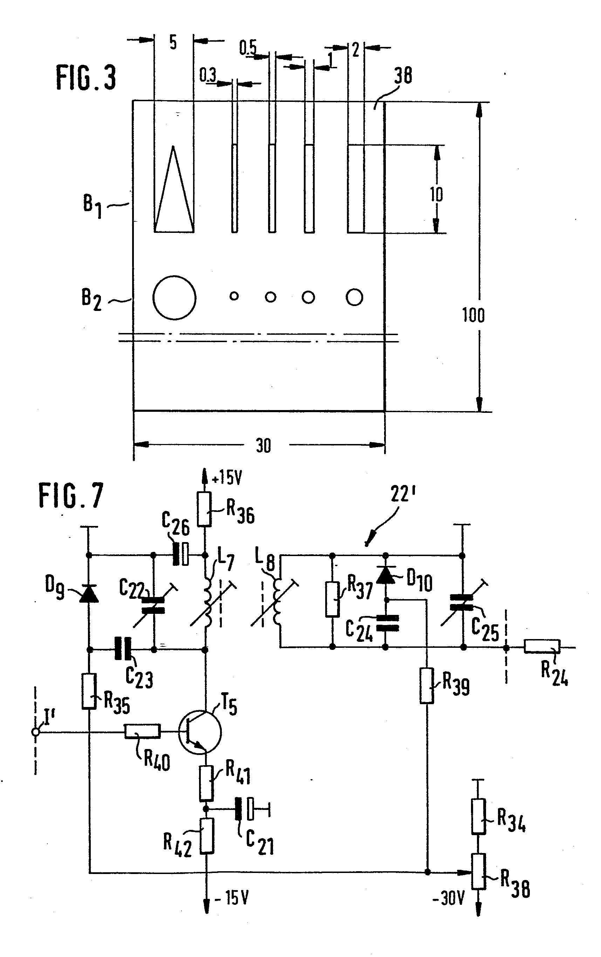

In Fig. 3 ist ein Fehlerstandard 38 wiedergegeben, wie es für Vergleichsversuche verwendet worden ist. Das dargestellte Standard hat eine Breite von 30 mm und eine Länge von 100 mm. Es besteht aus dem Prepreg-System CFK T300/914C und ist in Form eines Laminats mit einer Gesamtdicke von 2 mm ausgebildet mit einem Lagenaufbau $(0_8)_s$. Als Fehler wurden durch eine Doppeltrennfolie aus PTFE mit einer Dicke von 80 μm in der Mittelebene lokale Delaminationen erzeugt, deren Form in Fig. 3 wiedergegeben ist. Es handelt sich hier in einer ersten Reihe $B_1$ um länglich ausgebildete Delaminationen mit einer Länge von jeweils 10 mm. In einer Reihe $B_2$ darunter sind kreisförmige Delaminationen angeordnet. In der Reihe $B_1$ ist die linke Delamination als Dreieck mit einer Basisbreite von 5 mm ausgebildet. Die daneben liegenden Delaminationen sind rechteckförmig mit nach rechts steigender Breite von 0,3, 0,5, 1,0 und 2,0 mm. Die in der Reihe $B_2$ liegenden kreisförmigen Delaminationen haben jeweils einen Durchmesser entsprechend der Breite der Delaminationen in der Reihe $B_1$.

Von dem Fehlerstandard 38 wurden C-Scans hergestellt und diese mit eingeblendeter Ultraschallamplitude aufgezeichnet. Ein pen-lift erfolgt hierbei bei einem Amplitudeneinbruch um 6 dB beim Hilfsreflektorecho und um 14 dB beim Oberflächenecho. Das Hilfsreflektorecho wurde durch eine Glasplatte erzeugt, die in 3 mm Abstand unter der Probe angeordnet war. Die Einblendung der Amplitude gibt weitere Informationen über den Verlauf der Fehlerränder, der durch die hier gewählte Ausbildung der lokalen Delaminationen mit Hilfe einer Doppeltrennfolie besonders steil erfolgen sollte.

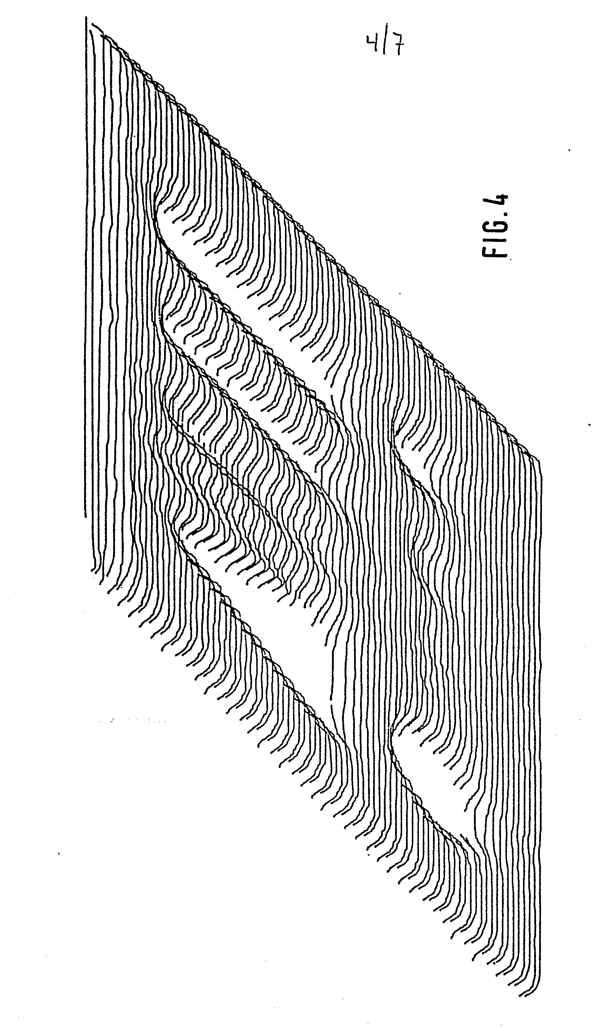

Bei der Messung mit breitbandigem Empfangssignal werden die Ränder der Delaminationen unscharf, wie aus der Darstellung in Fig. 4 ersichtlich. Hier sind insbesondere die kreisförmigen Delaminationen mit 0,3 und 0,5 mm Durchmesser nicht zu erkennen.

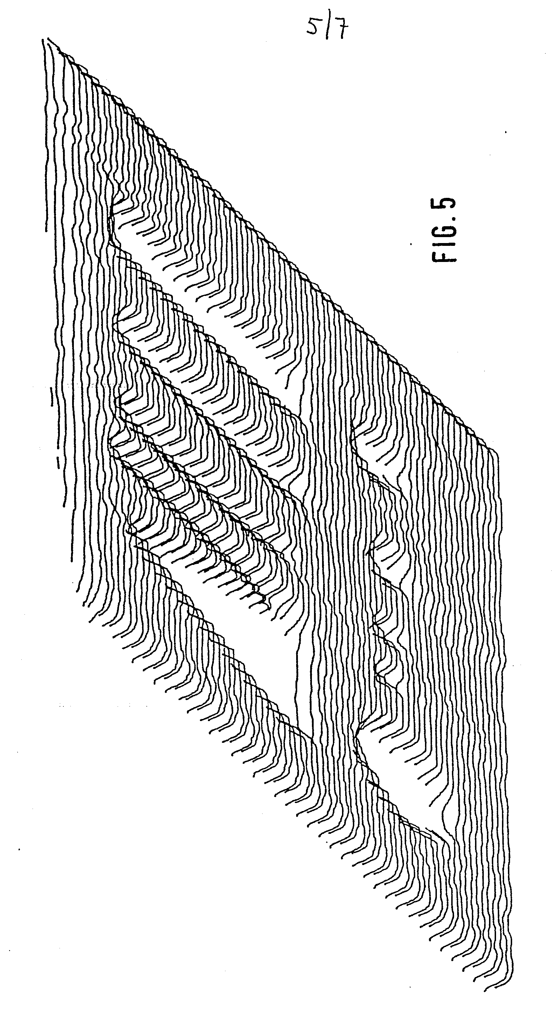

Ein C-Scan, der unter Verwendung des erfindungsgemäßen Filtersystems hergestellt wurde, ist in Fig. 5 dargestellt. Hier sind die Fehlerränder entsprechend ihrer Ausbildung mit steilem Verlauf wiedergegeben und auch die kreisförmigen Fehler mit 0,3 und 0,5 mm Durchmesser sind gut aufgelöst dargestellt. Durch den steilen Verlauf der Ränder aller Fehler heben sich die Delaminationen deutlich aus den fehlerfreien Gebieten ab.

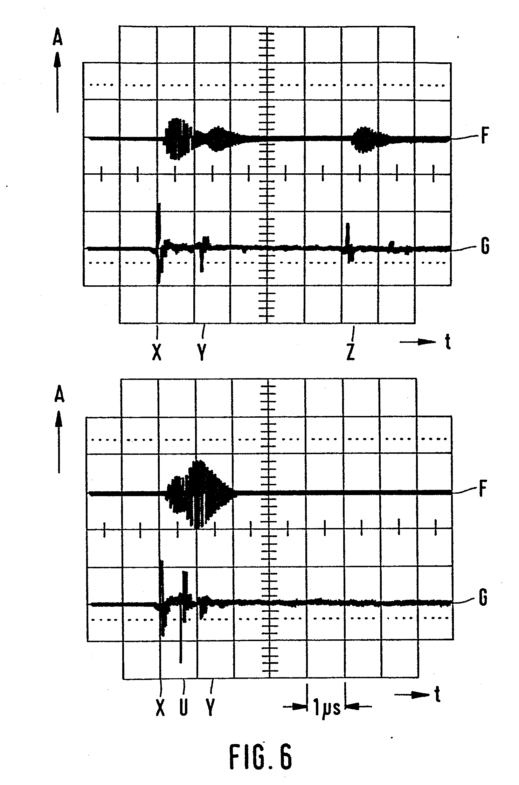

Bei dieser hohen lateralen Auflösung wird die axiale Auflösung durch die breiteren Echos infolge der Filterung schlechter. Da am Ausgang $E_2$ des Filtersystems 18 gleichzeitig das breitbandige Ultraschallempfangssignal zur Verfügung steht, kann dieses zur Fehlertiefenbestimmung benutzt werden. Fig. 6 zeigt Schirmbilder eines entsprechend Fig. 1 angeschlossen zweikanaligen Oszilloskops. Es ist jeweils in der oberen Hälfte des Schirmbildes das gefilterte Ultraschallsignal F dargestellt, während im unteren Bereich das ungefilterte breitbandige Ultraschallsignal G wiedergegeben ist. Dargestellt ist die Amplitude A über der Zeit t.

In Fig. 6 oben ist die Signalabbildung eines fehlerfreien Bereiches des Prüflings wiedergegeben, während in Fig. 6 unten eine Signalabbildung mit einer Fehleranzeige erscheint. In Fig. 6 oben ist klar erkennbar das Oberflächenecho X, das Rückseitenecho Y

und das Hilfsreflektorecho Z. Den Impulsen X, Y und Z, die aus dem breitbandigen Empfangssignal aufgezeichnet werden, können jeweils die gefilterten schmalbandigen Signale klar zugeordnet werden.

Im unteren Bild ist in der Wiedergabe des breitbandigen Signales zwischen dem Oberflächenecho X und dem Rückwandecho Y das Fehlerecho zeitlich U klar erkennbar. Das Hilfsreflektorecho Z ist nicht mehr erkennbar. Im unteren Kanal ist die hohe axiale Auflösung erkennbar, durch die das Fehlerecho in der Mitte zwischen dem Oberflächen- und dem Rückwandecho klar erkennbar und damit der Fehler in der Probenmitte lokalisierbar ist. Anhand der Wiedergabe des schmalbandigen Signales wird eine genaue laterale Bestimmung des Fehlers erreicht.

Hieraus ergeben sich die Vorteile des Verfahrens: das Schmalbandfilter im Empfänger definiert die Prüffrequenz von 10 MHz mit einer Bandbreite von 400 KHz. Dadurch ist eine Punktfokussierung von wenigen Zehntel Millimetern möglich, die eine hohe laterale Auflösung ergibt. Gleichzeitig kann die Fehlertiefe genau gemessen werden, wenn das breitbandige Signal, welches eine hohe axiale Auflösung erlaubt, ausgewertet wird.

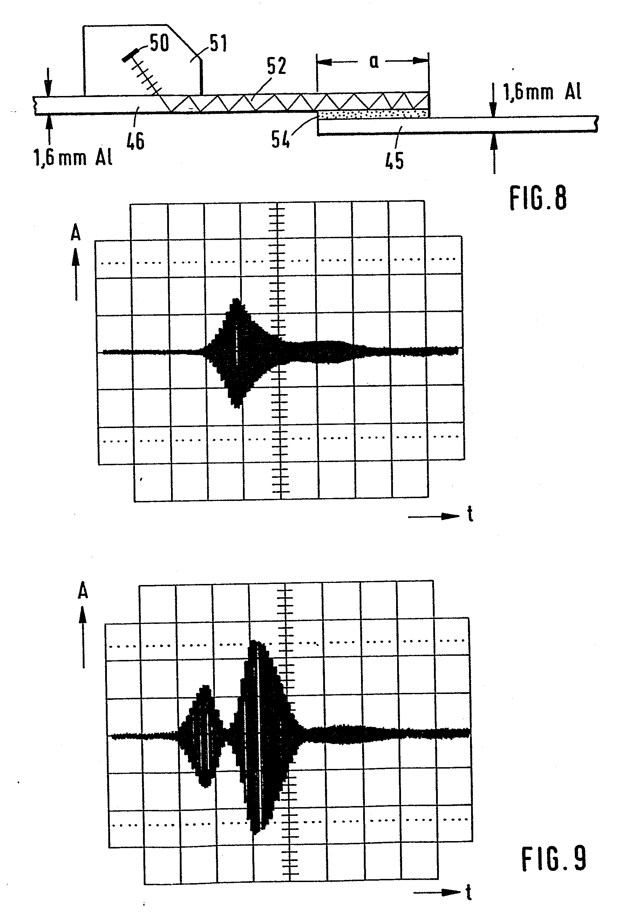

Bei Metallklebverbindungen von Blechen, wie sie beispielsweise in der Luftfahrtindustrie verwendet werden, kann eine Fehlerfeststellung durch eine Plattenwellenprüfung mittels Ultraschall durchgeführt werden. Plattenwellen werden mit Hilfe von winkelförmigen Prüfköpfen erzeugt, über die Longitudinal- oder Transversalwellen in eines der Bleche im Bereich der Verklebung eingeschallt wird. Eine Versuchsanordnung für eine Plattenwellenprüfung ist in Fig. 8 schematisch dargestellt. Hier sind zwei Aluminiumbleche 45, 46 mit einer Dicke von 1,6 mm überlappend angeordnet und im Überlappungsbereich a, der eine Breite von 20 mm hat, über eine Klebschicht 54 miteinander verbunden. Der Sendequarz 50 ist im Prüfkopf 51 so angeordnet, daß der Schall unter einem Winkel α in das obere Blech eingestrahlt wird. Der Weg der Schallwellen in dem Blech 46 ist durch die Zickzacklinie 52 angedeutet.

Unterschiedliche Wellenmoden lassen sich durch unterschiedliche Einschallwinkel, aber auch bei konstantem Einschallwinkel durch Änderungen der Prüffrequenz erzeugen (Buch Krautkrämer, "Werkstoffprüfung mit Ultraschall", Springer-Verlag, Berlin-Göttingen-Heidelberg, 1980).

Werden mehrere Wellenmoden gleichzeitig angeregt, so treten Mehrfachechos auf, die leicht als zusätzliche Fehler interpretiert werden. Um dies zu vermeiden, ist es bekannt, die Plattenwellenprüfung mit einem Schmalband-Ultraschallsender durchzuführen, wobei ein definiertes, schmalbandiges Frequenzspektrum einen einzigen Wellenmode anregt (Crostack u.a. "Ultraschallprüfung mit Sendeimpulsen stufenlos veränderlicher Frequenz und steuerbarer Spektralverteilung" in der Zeitschrift "Materialprüfung", 20 (1978), Nr. 10, S.372/377).

In gleicher Weise wie bereits oben beschrieben, lassen sich definierte Prüfverhältnisse auch bei breitbandiger Anregung erreichen, wenn die vom Prüfkopf empfangenen Signale durch ein Schmalbandfiltersystem geleitet werden. Der Vorteil besteht auch hier darin, daß vorhandene Ultraschallprüfgeräte leicht mit einer preiswerten Filterschaltung nachgerüstet werden können.

Für die Plattenwellenprüfung ist ein durchstimmbares Filter erforderlich, damit die Isolierung des für die speziellen Prüfbedingungen optimalen Wellenmodes möglich ist. Ein hierfür geeignetes Filtersystem entspricht grundsätzlich dem nach Fig. 2. Eine zweckmäßige Schaltung eines durchstimmbaren Schmalbandfilters 22', das an die Stelle des Schmalbandfilters 22 in Fig. 1 tritt, ist in Fig. 7 wiedergegeben. Das am Eingang I' anstehende Signal gelangt über $R_{40}$ auf den als spannungsgesteuerte Stromquelle arbeitenden Transistor $T_5$. $R_{41}$ erzeugt eine starke Gegenkopplung, um eine Übersteuerung zu vermeiden. Das aus den Spulen $L_7$ und $L_8$ bestehende Bandfilter ist mit Kapazitätsdioden $D_9$, $D_{10}$

durchstimmbar. Die Prüffrequenz ist abhängig von der an den Dioden anliegenden Spannung, die über einen Wendelpotentiometer $R_{38}$ einstellbar ist. Die übrigen Schaltelemente dienen in bekannter Weise zur Entkopplung von Gleich- und Signalspannungen. Das Filtersystem ist hier so ausgelegt, daß die Prüffrequenz im Bereich von 1,0 bis 2,2 MHz wählbar ist. Bei der Durchführung einer Plattenwellenprüfung mit der Anordnung nach Fig. 8 wurde ein S/E Winkelprüfkopf, bei dem Sende- und Empfangsquarz getrennt sind, (2 MHz, 35° der Firma Chen & Lehmann, Erftstadt) verwendet. Am Schmalbandfilter nach Fig. 7 war eine Prüffrequenz von 2,06 MHz eingestellt. Bei der Plattenprüfung ergibt das Breitbandsignal, das bei der oben unter Bezug auf Fig. 1 beschriebenen Prüfung für die axiale Auflösung zusätzlich ausgewertet wird, keine brauchbare Zwischeninformation. Es wurde daher nur der Ausgang des Schmalbandfilters 22' auf das Oszilloskop 36 geschaltet.

In Fig. 9 ist oben mit der Amplitude A über der Zeit t das Oszillogramm einer einwandfreien Klebung dargestellt. Hier tritt nur ein Echo auf. Bei einer fehlerhaften Verbindung, von der das Oszillogramm in Fig. 9 unten wiedergegeben ist, treten klar erkennbar zwei Echos auf. Mit einem dem Empfänger nachgeschalteten Schmalbandfilter der beschriebenen Art, das auf einen optimalen Wellenmode abgestimmt ist, lassen sich somit eindeutig identifizierbar und reproduzierbar fehlerhafte Klebeverbindungen feststellen. Bei Vergleichsversuchen, die mit einem Breitbandsystem bekannter Art durchgeführt werden, ließen sich keine eindeutigen Unterschiede zwischen fehlerhaften und fehlerfreien Bereichen ermitteln.

Liste der in den Schaltungen nach Fig. 2 und 7 verwendeten Bauteile

| | Widerstand R $\Omega$ | Kondensator C F | Transistor Typ | Diode D Typ | Induktivität L $\mu H$ |
|---|---|---|---|---|---|
| 1 | 10 K | 4.7 μ | BF 245 A | 1N4148 | 22 |
| 2 | 470 | 4.7 μ | BF 241 | | 22 |
| 3 | 100 | 4.7 n | BF 241 | | 2.5 |
| 4 | 47 | 4.7 n | BF 245 B | | 2.5 |
| 5 | 3,9 K | 4.7 n | | | 47 |
| 6 | 47 | 4.7 μ | | 1N4148 | 47 |
| 7 | 680 | 1 μ | | C7V5 | 160 |
| 8 | 15 K | 100 p | | C7V5 | 160 |
| 9 | | 47 n | | BB113 | |
| 10 | | 4.7 n | | BB113 | |
| 11 | | 47 n | | | |
| 12 | | 47 n | | | |
| 13 | 15 K | 4.7 n | | | |
| 14 | 22 | 47 n | | Amplifier $IC_1$ and $IC_2$ | |
| 15 | 15 K | 1 μ | | Type LH 0002 | |
| 16 | 3,9 K | 4.7 μ | | | |
| 17 | 1,5 K | 4.7 μ | | | |
| 18 | 47 | 4.5 μ | | | |
| 19 | 150 | 4.7 μ | | | |
| 20 | 150 | 4.7 μ | | | |
| 21 | 120 | 4.7 μ | | | |
| 22 | 6.8 K | 3/10 p | | | |
| 23 | 1,5 K | 47 n | | | |
| 24 | 47 | 47 n | | | |
| 25 | 10 K | 3/10 p | | | |
| 26 | 47 | | | | |
| 27 | 47 | | | | |
| 28 | 47 | | | | |
| 29 | 47 | | | | |

| Widerstand R $\Omega$ | | | Kondensator C F |
|---|---|---|---|
| 30 | 47 | | |
| 31 | 10 K | | |
| 32 | 47 | 33 | 3.9 K |
| 34 | 1.5 K | | |
| 35 | 100 K | | |
| 36 | 100 | | |
| 37 | 100 K | | |
| 38 | 10 K | | |
| 39 | 100 K | | |
| 40 | 47 | | |
| 41 | 1.5 K | | |

Ansprüche

1.  Vorrichtung zur Ultraschall-Prüfung mit einem Stoßwellensender, einem breitbandigen Prüfkopf und einem Anzeige- und/oder Aufzeichnungsgerät für reflektierte bzw. durchgelassene Signale, dadurch gekennzeichnet, daß dem Prüfkopf empfangsseitig wenigstens ein Bandpaßfilter nachgeschaltet ist, das für ein Frequenzspektrum durchlässig ist, das wesentlich schmaler ist als das vom Sendekristall abgegebene Breitbandspektrum und daß das ausgefilterte Schmalbandspektrum auf das Anzeige- und/oder Aufzeichnungsgerät geschaltet ist.

2.  Vorrichtung nach Anspruch 1, dadurch gekennzeichnet, daß ein durchstimmbares Bandpaßfilter vorgesehen ist.

3.  Vorrichtung nach Anspruch 1, dadurch gekennzeichnet, daß eine Mehrzahl parallel betreibbarer Bandpaßfilter vorgesehen ist, die auf unterschiedliche Mittenfrequenzen abgestimmt sind.

4.  Vorrichtung nach Anspruch 1 oder 2, dadurch gekennzeichnet, daß zu dem Bandpaßfilter ein Bypaß für das Breitbandspektrum vorgesehen ist und daß das Breitbandspektrum und das Schmalbandspektrum parallel auf das Anzeige- und/oder Aufzeichnungsgerät geschaltet ist.

5.  Vorrichtung nach Anspruch 1, dadurch gekennzeichnet, daß Schaltmittel vorgesehen sind, mit denen nur im Monitorblendenbereich das Schmalbandfilter wirksam gemacht wird, um durch exaktes Setzen von Blenden eine hohe axiale Auflösung zu erhalten.

FIG.1

FIG. 2

f=1-14MHz

f=1 14MHz

f=10MHz
B=400kHz

**FIG.3**

**FIG.7**

FIG.4

FIG.5

5/7

0116901

FIG. 6

7/7

FIG.8

FIG.9